# EUROPEAN PATENT APPLICATION

(11) **EP 3 896 636 A1**
(43) Date of publication of application: **20.10.2021**
(21) Application number: 19896402.5
(22) Date of filing: 09.12.2019
(51) Int. Cl.: G06Q 30/06

(54) **INFORMATION PROCESSING DEVICE AND PROGRAM**

(30) Priority: 11.12.2018 JP 2018231710
(71) Applicant: Assemblogue, Inc., Tokyo 100-6208 (JP)
(72) Inventor: HASIDA, Koiti, Tokyo 100-6208 (JP)
(74) Representative: Würmser, Julian
(86) International application number: PCT/JP2019/048138
(87) International publication number: WO 2020/122027

(57) **Abstract**

Provided is an information processing device capable of generating a recommendation satisfying the needs of a user with high accuracy. An information processing device 10 includes: a PDS (Personal Data Store) unit 12 that stores user data and outputs the stored user data; a dialogue unit 11 that acquires the user data through a dialogue with a user and stores the acquired user data in the PDS unit 12; and a matching unit 13 that acquires catalog data including information relating to commercial items and services from a business-operator system 20, generates a recommendation of at least one of the commercial items and the services from the catalog data on a basis of the user data output from the PDS unit 12, and outputs the generated recommendation to the user.

## Description

### Technical Field

The present invention relates to an information processing device and a program.

### Background Art

Conventionally, in order to ascertain various needs of users (such as individuals and institutions), data, such as retrieval logs by information terminals, use records of Al speakers, and purchase records, has been acquired using cookie IDs or the like. Data acquired in this way is used by business operators to provide recommendation services or targeting advertisements.

For example, Patent Document 1 discloses a system that gives a recommendation notification of facility information to a user. In the system described in Patent Document 1, a facility for which a user is urged to make a reservation is determined on the basis of calendar information and user attribute information on the user, and a prescribed recommendation relating to the facility is notified.

Further, Patent Document 2 discloses a recommendation device that gives a prescribed recommendation to a friend of a user in social networking service.

When a prescribed condition is satisfied in the recommendation device, a prescribed commercial item is selected on the basis of publicly available information on a user and commercial item purchase records of a friend of the user. Then, the friend of the user is notified of a recommendation to the effect that the selected commercial item be purchased at an electronic market and given to the user.

### Citation List

### Patent Document

Patent Document 1: Patent Publication JP-A-2017-174166
Patent Document 2: Japanese domestic re-publication of PCT Application No. 2016/125237

### Summary

### Technical Problem

**As** described above, conventionally business operators individually collect data to use the same for recommendations. However, since there are restrictions in terms of privacy or the like on the data that the respective business operators collect individually, it is not assumed that data collected by one business operator is used by another business operator. Accordingly, since any of the business operators is not allowed to comprehensively collect the data of a user and has to generate a recommendation on the basis of partial data relating to only one aspect of the user, it is difficult to satisfy the needs of the user with high accuracy.

On the other hand, there is a technology called PDS (Personal Data Store) in which a user himself/herself comprehensively stores and manages his/her own data without putting the same in the hands of a business operator. In the PDS, all information relating to a user is unitarily and comprehensively managed. With the use of the comprehensive data of a user managed by the PDS, an increase in the accuracy of a recommendation is expected.

In view of this, it is an object of the present invention to provide an information processing device capable of generating a recommendation satisfying the needs of a user with high accuracy.

### Solution to Problem

An information processing device according to an aspect of the present invention includes: a PDS (Personal Data Store) unit that stores user data and outputs the stored user data; a dialogue unit that acquires the user data through a dialogue with a user and stores the acquired user data in the PDS unit; and a matching unit that acquires catalog data including information relating to commercial items and services from a business-operator system, generates a recommendation of at least one of the commercial items and the services from the catalog data on a basis of the user data output from the PDS unit, and outputs the generated recommendation to the user.

According to this aspect, the dialogue unit acquires various user data including the personal data of a user through a dialogue with the user. Then, the user data acquired by the dialogue unit is managed in the PDS so that access to the user data is restricted by the user. Then, the matching unit performs prescribed matching processing on the basis of the user data and catalog data acquired from the business-operator system and generates and outputs a recommendation of a commercial item and a service to the user. Accordingly, it is possible to generate a recommendation satisfying user's needs with high accuracy on the basis of data (personal data) relating to the user. Further, such a recommendation with high accuracy leads to an improvement in the frequency of purchasing or use of a commercial item and a service.

### Advantageous Effects of Invention

According to the present invention, an information processing device capable of generating a recommendation satisfying the needs of a user with high accuracy can be provided.

### Brief Description of Drawings

Fig. 1 is a diagram showing an example of the schematic configuration of an information processing device and an information processing system according to a first embodiment.
Fig. 2 is a block diagram showing an example of the schematic configuration of the hardware of a user terminal 10 according to the first embodiment.
Fig. 3 is a flowchart showing an example of the acquisition and storage processing of user data according to the first embodiment.
Fig. 4 is a flowchart showing an example of matching processing according to the first embodiment.
Fig. 5 is a diagram showing an example of the schematic configuration of an information processing device according to a second embodiment.

### Description of Embodiments

Preferred embodiments of the present invention will be described with reference to the accompanying drawings. (Note that components denoted by the same symbols have the same or similar configurations in respective figures.)

### [First Embodiment]

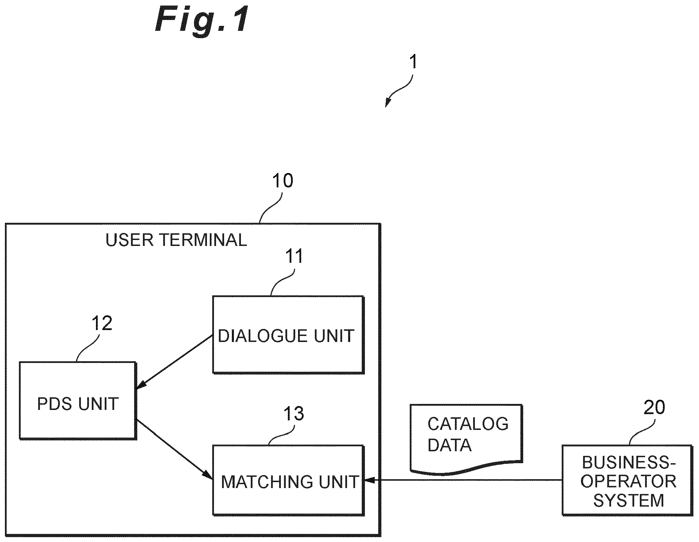

Fig. 1 is a diagram showing an example of the schematic configuration of an information processing device and an information processing system according to a first embodiment. As shown in Fig. 1, the information processing device according to the first embodiment is realized as a user terminal 10. An information processing system 1 includes the user terminal 10 and a business-operator system 20.

### (1) Function Configuration

### (1-1) User Terminal

The user terminal 10 is, for example, an information processing terminal used by a user serving as a general consumer or worker. The user terminal 10 is communicably connected via a wired or wireless network such as a broadband line to the business-operator system 20 managed by a prescribed business operator. The user terminal 10 is, for example, a computer used by a user and includes a memory, a processor, or the like. The user terminal 10 is, for example, a personal computer, a tablet terminal, a smartphone, or the like.

In the memory of the user terminal 10, a program for performing a dialogue unit 11, a PDS unit 12, and a matching unit 13 is stored. The processor of the user terminal 10 can realize the dialogue unit 11, the PDS unit 12, and the matching unit 13 by performing the program. The dialogue unit 11, the PDS unit 12, and the matching unit 13 may be function modules performed by the processor of the user terminal 10, or may be applications each of which is separately performed.

### (1-2) Dialogue Unit

The dialogue unit 11 acquires user data on a user through a dialogue with the user. The dialogue unit 11 may have, for example, a function (for example, a natural language dialogue or the like) as a dialogue agent, a chatbot, an Al speaker, or the like.

The content of user data handled by the dialogue unit 11 is not particularly limited but includes not only basic attribute information on the person concerned but also various matters such as interests, affiliations, friendship relations, action records, and purchase and use records on commercial items and services. Specifically, the content of user data includes information on social networks, purchase records, preference information (such as records on running and records on hiking), medical records, records on deposits and withdrawals of banks, or the like.

The dialogue unit 11 outputs a question to a user via an output device 114 of the user terminal 10 that will be described later. The dialogue unit 11 may acquire question data stored in advance in the user terminal 10 and output the same, or may acquire question data from other databases via a communication network and output the same. Further, the dialogue unit 11 may output a question about user's evaluation of commercial items and services included in catalog data that will be described later and acquire an answer to the question.

A question output from the dialogue unit 11 is not limited to a narrow question explicitly asking for something but broadly includes an indication and an expression such as speaking, calling, and nodding that urge a user to give any answer. A mode for outputting a question is not particularly limited. However, when the output device 114 is constituted as a display device, an arbitrary content such as text and an image relating to a question may be displayed on the display device. Alternatively, when the output device 114 is constituted as a voice output device, voice relating to a question may be output from the output device 114. The dialogue unit 11 may cause the output device 114 serving as a display device to display a character such as a (personal) agent and an avatar and output a question in a mode in which the character utters the question.

For example, the dialogue unit 11 may adaptively change a subsequent question in accordance with the content of an acquired user's answer on the basis of a learning model generated by machine learning. Alternatively, the dialogue unit 11 may output a question on the basis of a scenario in which the content of a subsequent question is fixed (a scenario that may be stored in advance in the memory of the user terminal 10 or a scenario that may be acquired via a communication network from other information processing devices, databases, or the like) in accordance with the content of an answer.

### (1-3) PDS Unit

The PDS unit 12 has the function of storing the data (user data) of a user (an individual or a business operator) and outputting the same.

### <Range of User Data>

The PDS unit 12 stores user data in a prescribed storage unit. The user data is not limited to user data collected by the dialogue unit 11 but may include user data acquired from other applications or user data acquired from other information processing devices, databases, or the like via a communication network. The prescribed storage unit in which the PDS unit 12 stores the user data may be, for example, the memory of the user terminal 10 that will be described later, or may be an external storage.

### <Access to User Data>

The PDS unit 12 may store user data so that only a user or a person authenticated by the user is allowed to access the user data. Specifically, the PDS unit 12 may perform the hiding of user data. Here, the hiding of user data refers to making access to the user data difficult. For example, the hiding includes encryption, secret sharing, or the like.

### (1-4) Matching Unit

The matching unit 13 is an example of a matching unit and generates a prescribed recommendation on the basis of user data.

The matching unit 13 acquires, for example, catalog data including information relating to commercial items and services from the business-operator system 20. Then, as matching processing, the matching unit 13 analyzes the content of the acquired catalog data, selects at least one of the commercial items and the services from among the catalog data on the basis of user data stored by the PDS unit 12, and generates and outputs a recommendation.

The method of the matching processing performed by the matching unit 13 is not particularly limited, but the matching unit 13 may select a commercial item and a service on the basis of user's attribute information, purchase information, or the like. Further, the matching processing may be performed on the basis of not only information such as attribute information, purchase information, and preference information that is acquirable by a business operator but also more secret personal data.

Here, the personal data represents data including user's personal information and includes, for example, data on user's trouble, preferences, secrets, sexual orientation, criminal records, or the like that a user wants to hide from others. Further, the personal data may broadly include, for example, muttering or the like expressed by a user during a dialogue with the dialogue unit 11 or in other scenes.

The matching unit 13 may transmit a request for catalog data to the business-operator system 20 at a prescribed cycle or at an arbitrary timing such as when user data collected by the PDS unit 12 is updated.

The matching unit 13 may calculate the degree to which the respective segments of the user data contribute to a recommendation (the degree of contribution to the recommendation) and output the same. Here, the respective segments of the user data may be specific examples of the user data listed above. For example, when a certain segment of data is a real value and the result of a recommendation is differentiable by the value, the derivative value of the segment can be used as the degree of contribution of the segment.

The matching unit 13 may transmit the degree to which the respective portions of user data contribute to a recommendation to the business-operator system 20. Thus, the business-operator system 20 may calculate a reward that is to be distributed to a person who has presented the respective segments of the user data to a user. When a purchase is made on the basis of a recommendation, a profit is distributed also to a data provider according to the degree of contribution, whereby more personal data with higher quality is given to the person concerned and the creation of more values is expected in the whole society.

### (1-5) Business-operator System

The business-operator system 20 is, for example, an information processing system managed and used by an entity that performs operations relating to commercial items and services such as the provision of commercial items and services. The entity that manages and uses the business-operator system 20 is not particularly limited but may include, for example, the manufacturers or sellers of commercial items, the providers of services, whole sale agents, retail distributors (including persons who manage real shops and/or electronic commerce sites), or the like.

The business-operator system 20 transmits, for example, catalog data to the user terminal 10 via a communication network or the like. The content of the catalog data may relate to commercial items and services or the like provided by an entity that manages and uses the business-operator system 20. The catalog data may include, for example, the various information (such as raw materials, specifications, producing districts, manufacturer names, and sales channels) of commercial items and services regardless of their data formats such as text and an image. The catalog data may include purchase achievements such as hot selling and ranking relating to commercial items and services, information relating to commercial items and services recommended by an entity, and word-of-mouth information.

The business-operator system 20 may transmit the catalog data to the user terminal 10 at a prescribed cycle (that includes a time, a date, a week, a month, a year, and an arbitrary unit and may fluctuate) or at an arbitrary timing such as when the catalog data is updated. Alternatively, the business-operator system 20 may transmit the catalog data to the user terminal 10 in accordance with a request for the catalog data acquired from the user terminal 10.

### (2) Hardware Configuration

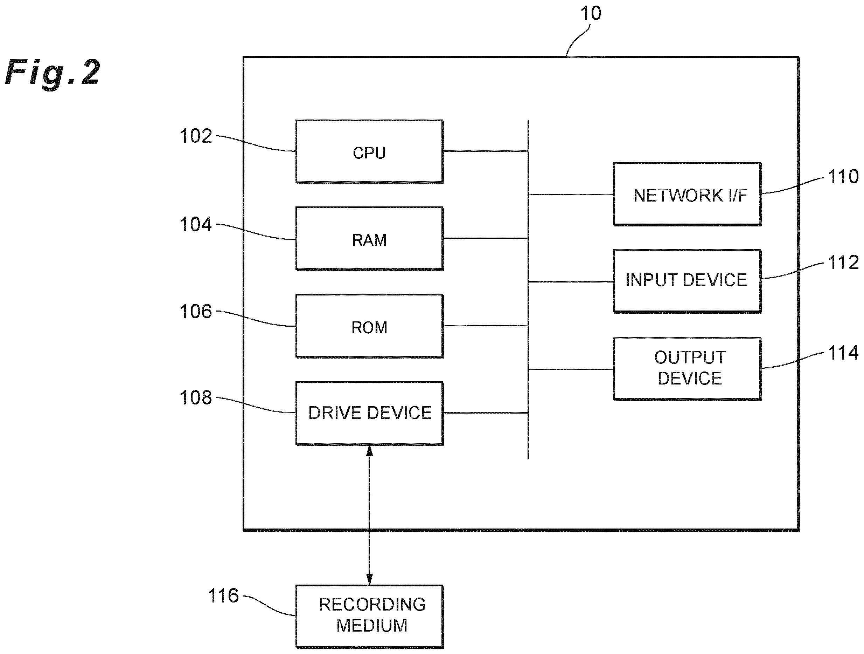

Fig. 2 is a block diagram showing an example of the schematic configuration of the hardware of the user terminal 10 according to the first embodiment. Note that the business-operator system 20 may also have a hardware configuration similar to that of the user terminal 10 that will be described below.

As shown in Fig. 2, the user terminal 10 has, for example, a CPU (Central Processing Unit) 102, a RAM (Random Access Memory) 104, a ROM (Read Only Memory) 106, a drive device 108, a network I/F 110, an input device 112, and an output device 114. These respective configurations are connected so as to be capable of transmitting and receiving data to and from each other via a bus.

The CPU 102 is an example of a processor that performs the control of respective devices or the computation and processing of data inside a computer. The CPU 102 performs a program stored in a memory such as the RAM 104 and the ROM 106. The CPU 102 receives data from the input device 112, the network I/F 110, or the like and outputs a computation result to the output device 114 or the like after performing the computation and processing of the received data.

The RAM 104 is, for example, a memory constituted as a main storage unit. The RAM 104 is a storage unit that stores a program or data such as an OS (Operating System) that is basic software performed by the CPU 102 and application software. The ROM 106 is, for example, a memory that is constituted as an auxiliary storage unit and stores data relating to application software or the like.

The drive device 108 reads a program or data from a recording medium 116, for example, a CD-ROM, an SD card, or the like and installs the same in a memory. Further, the recording medium 116 stores a prescribed program or data, and the program or the data stored in the recording medium 116 is installed in the user terminal 10 via the drive device 108. The installed prescribed program is capable of being performed by the user terminal 10.

The network I/F 110 is an interface between a peripheral device having a communication function and the user terminal 10. Further, the network I/F 110 is connected via, for example, a network such as a LAN (Local Area Network) and a WAN (Wide Area Network) constructed by a data transmission path such as a wired line and/or a wireless line.

The input device 112 has, for example, a keyboard including cursor keys, numeric input and various function keys, or the like, a mouse or a slide pad for performing the selection of keys or the like on the display screen of the output device 114 constituted as a display device, or the like. Further, the input device 112 may be constituted as, for example, a voice input device such as a microphone that allows the input of user's voice. Further, the input device 112 is a user interface used by a user to give operating instructions to the CPU 102 or input data.

The output device 114 is constituted as, for example, a display device and/or a voice output device. The output device 114 may be constituted as, for example, a display device by an LCD (Liquid Crystal Display) or the like and perform a display in accordance with display data input from the CPU 102. Further, the output device 114 may be constituted as a voice output device by a speaker or the like and output voice in accordance with voice data input from the CPU 102.

Note that the input device 112 or the output device 114 may be provided on the outside of the user terminal 10.

### (3) Processing of Information Processing System 1

### (3-1) Acquisition and Storage Processing of User Data

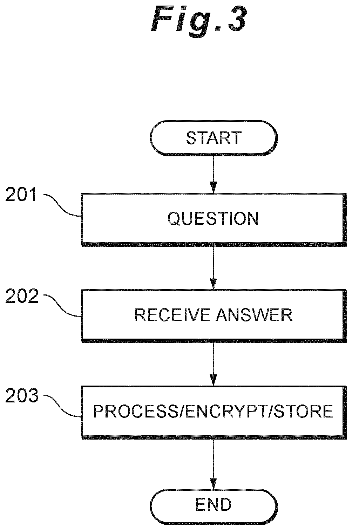

Fig. 3 is a flowchart showing an example of the acquisition and storage processing of user data according to the first embodiment.

### (S201)

First, the dialogue unit 11 outputs a question to a user. An output mode is not particularly limited. However, for example, an arbitrary content such as text and an image may be displayed on the output device 114 serving as a display device, or voice may be output from the output device 114 serving as a voice output device.

The timing at which the dialogue unit 11 outputs a question to the user is not particularly limited. For example, the dialogue unit 11 may output a question to the user when a position information determination unit (not shown) of the user terminal 10 determines a change in the position of the user terminal 10 or when the user terminal 10 receives catalog data from the business-operator system 20. Further, the dialogue unit 11 may output a question to the user, for example, when the dialogue unit 11 is started in the user terminal 10, when a prescribed time comes, or when the dialogue unit 11 acquires the input of an answer showing a content specified in advance, or the like.

### (S202)

Next, the dialogue unit 11 receives an answer when the user inputs the answer by operating the input device 112 of the user terminal 10. A method for giving an answer from the user is not particularly limited, but the user may give the answer by, for example, inputting text, pressing a button, or the like. Alternatively, the user may give an answer through voice utterance.

### (S203)

Then, the PDS unit 12 processes and/or hides the answer (user data) from the user received by the dialogue unit 11 and stores the processed answer in the memory. The PDS unit 12 may store the user data in the memory after hiding the user data so that persons other than the user or a person authenticated by the user are not allowed to access the user data. In the manner described above, the acquisition and storage processing of user data ends.

### (3-2) Matching Processing

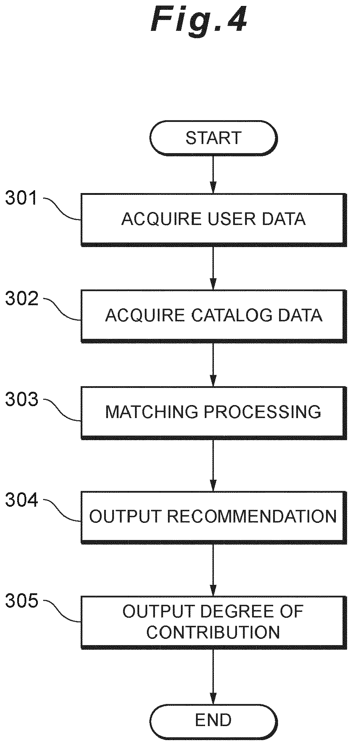

Fig. 4 is a flowchart showing an example of matching processing according to the first embodiment.

### (S301)

First, the matching unit 13 acquires user data collected by the PDS unit 12. The acquisition source of user data may correspond to the place of the memory stored in the PDS unit 12 as described above, and may be, for example, the memory of the user terminal 10 or an external storage.

(S302) Next, the matching unit 13 acquires catalog data from the business-operator system 20. The timing at which catalog data is acquired may be an arbitrary timing as described above.

### (S303)

Then, the matching unit 13 performs matching processing between the user data acquired from the PDS unit 12 and the catalog data acquired from the business-operator system 20. Specifically, the matching unit 13 selects a commercial item and a service to be recommended to the user from among the catalog data on the basis of the user data.

### (S304)

Next, the matching unit 13 generates a recommendation relating to the selected commercial item and the service and outputs the same on the basis of the matching processing.

### (S305)

Then, the matching unit 13 calculates the degree to which the respective portions of the user data contribute to the recommendation and outputs the same. In the manner described above, the matching processing ends.

### [Second Embodiment]

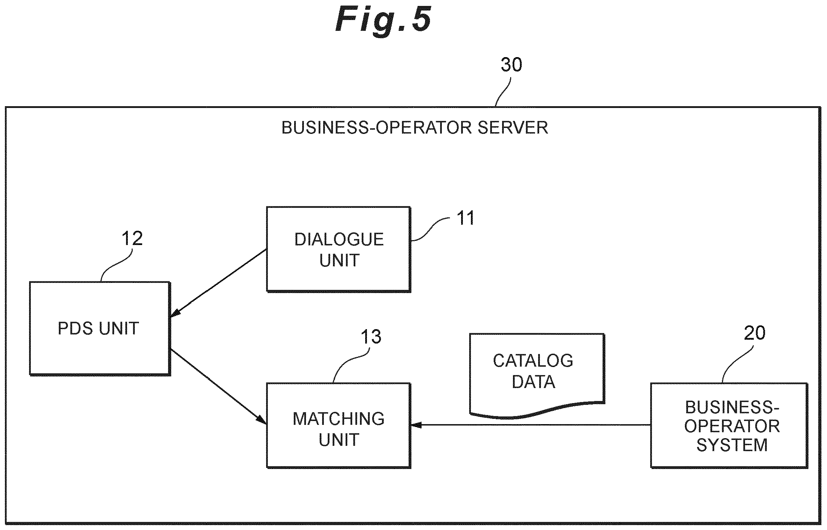

Fig. 5 is a diagram showing an example of the schematic configuration of an information processing device according to a second embodiment. As shown in Fig. 5, the information processing device according to the second embodiment is realized as, for example, a business-operator server 30 managed and used by a business operator.

The business-operator server 30 may have, for example, a hardware configuration similar to that of the user terminal 10 described using Fig. 2. The business-operator server 30 may include, besides a business-operator system 20, a dialogue unit 11, a PDS unit 12, and a matching unit 13 serving as function modules or application software. With such a mode, it is possible for a business operator to host the PDS of a user in the server of an own company to operate the dialogue unit 11 and the matching unit 13.

The business-operator server 30 may hide all user data that is to be stored (saved) and transmitted. Thus, the business operator is also technologically not allowed to access user data without user's consent. Such a mode realizes a relationship in which a business operator receives user data from a user and the user can withdraw and use the user data as occasion demands as, for example, an information bank.

Further, the provision of the matching unit 13 in the business-operator server 30 produces the advantage that the need to restrict the size of catalog data is eliminated.

### [Modified Example]

The dialogue unit 11 may output a question about a related commercial item and a service at a time at which a user purchases and uses the commercial item and the service (broadly including a time at which the user decides to purchase and use the commercial item and the service, a time at which the user is purchasing and using the commercial item and the service, a prescribed time after the user purchases and uses the commercial item and the service, or the like). By timely outputting a question like this, it is possible to extract information (collect user data) that is natural and reduces a feeling of burden for a user.

In the embodiments described above, a dialogue unit acquires various user data including the personal data of a user through a dialogue with the user. Then, the user data acquired by the dialogue unit is managed in a PDS unit in a state in which prescribed access to the user data is restricted by the user. Then, a matching unit performs prescribed matching processing on the basis of the user data and catalog data acquired from a business-operator system and generates and outputs a recommendation of a commercial item and a service to the user. Accordingly, it is possible to generate a recommendation satisfying user's needs with high accuracy on the basis of data (personal data) relating to a user. Further, such a recommendation with high accuracy leads to an improvement in the quality and the frequency of purchasing or using a commercial item and a service.

The embodiments described above are used to facilitate the understanding of the present invention and should not be used to interpret the present invention in a limited way. The respective elements of the embodiments and their arrangements, materials, conditions, shapes, sizes, or the like are not limited to the illustrated ones but can be appropriately changed. Further, it is possible to partially replace or combine the constituting elements shown in the different embodiments together.

### Reference Signs List

- 1: Information processing system
- 10: User terminal
- 11: Dialogue unit
- 12: PDS unit
- 13: Matching unit
- 20: Business-operator system
- 30: Business-operator server
- 102: CPU
- 104: RAM
- 106: ROM
- 108: Drive device
- 110: Network I/F
- 112: Input device
- 114: Output device
- 116: Recording medium

## Claims

1. An information processing device comprising:
a PDS (Personal Data Store) unit that stores user data and outputs the stored user data;
a dialogue unit that acquires the user data through a dialogue with a user and stores the acquired user data in the PDS unit; and
a matching unit that acquires catalog data including information relating to commercial items and services from a business-operator system, generates a recommendation of at least one of the commercial items and the services from the catalog data on a basis of the user data output from the PDS unit, and outputs the generated recommendation to the user.

2. The information processing device according to claim 1, wherein
the PDS unit stores the user data such that only the user or a person authenticated by the user is allowed to access the user data.

3. The information processing device according to claim 1 or 2, wherein
the dialogue unit further acquires, as the user data, user's evaluation of the commercial items and the services included in the catalog data.

4. The information processing device according to any one of claims 1 to 3, wherein
the matching unit further outputs a degree of contribution of respective portions of the user data to the recommendation.

5. A program for causing a computer including a storage unit to realize:
a PDS (Personal Data Store) unit that stores user data and outputs the stored user data;
a dialogue unit that acquires the user data through a dialogue with a user and stores the acquired user data in the PDS unit; and
a matching unit that acquires catalog data including information relating to commercial items and services from a business-operator system, generates a recommendation of at least one of the commercial items and the services from the catalog data on a basis of the user data output from the PDS unit, outputs the generated recommendation to the user, and further outputs a degree of contribution of respective portions of the user data to the recommendation.
